# DEMANDE DE BREVET EUROPEEN

(11) **EP 0 536 456 A1**
(43) Date de publication de la demande: **14.04.1993**
(21) Numéro de dépôt: 91402399.9
(22) Date de dépôt: 10.09.1991
(51) Int. Cl.: B23C 3/00

(54) **Machine à reprofiler les rails de chemin de fer usés**

(71) Demandeur: S.A.R.L. HABIMAT, F-75009 Paris (FR)
(72) Inventeur: Levy, Marcel Louis, F-92380 Garches (FR)

(57) **Abrégé**

L'invention a pour objet une machine à reprofiler les rails usés (1) dans laquelle le rail est mobile face à une ou deux fraises de forme stationnaires (10) (10a) qui reprofilent en une passe la partie utile de la surface de roulement et le rayon de raccordement de celle-ci au flanc latéral du champignon. Le rail est guidé dans son avance dans la zone de fraisage d'une part par des galets fixes (3) en appui sur la face à usiner et d'autre part des groupes de galets mobiles oblique (4) disposés en soutien et en appui latéral au champignon. Les galets mobiles obliques sont montés sur les chapes (5) basculant ensemble symétriquement et transversalement au rail autour de 2 arbres (6) parallèles au rail et de chaque côté de celui-ci.
Les arbres (6) sont solidaire de supports (8) actionnés au moyen de vérins (9). Sous l'effet des vérins (9) les galets obliques se placent en arc-boutement sur le rail (1) en prenant appui de chaque côté de celui-ci sur les arbres (6).

Les groupes de galets mobiles sont disposés respectivement à proximité en amont et en aval des fraises (10), (10a) selon le sens F1 de défilement du rail (1) et s'écartent successivement et temporairement sous la poussée d'avance du rail au passage d'une surépaisseur de soudure (1a) tandis que le niveau de la ligne de passe d'usinage déterminé par les galets fixes (3) reste inchangé, et que le rail reste toujours guidé.

La structure du support (8) largement ouverte sous les fraises, permet le dégagement facile des copeaux d'usinage. Ce dispositif de guidage particulièrement rigide assure un usinage sans vibrations et sans fléchissement du rail sous l'effet du fraisage.

## Description

Les rails de chemin de fer subissent une usure duc à la pression de contact des roues et leur surface se dégrade par ecrouissage tandis que la géométrie de la face de roulement est altérée. Ces rails peuvent être récupérés après démontage et envoi dans un atelier de régénération où ils sont reprofilés dans des machines d'usinage procédant par enlèvement de la couche superficielle de métal afin de restituer le profil de la face de contact aux roues.

On connaît les machines à reprofiler par rabotage utilisant des outils de forme en acier rapide. Ces machines ne sont pas adaptées au rails durs dont l'emploi se développe.

On connaît également les machines à reprofiler par fraisage dont les fraises sont équipées de plaquettes carbures.

Le brevet FR 1.299.795 décrit une machine de ce type caractérisée en ce que la face de roulement du rail usé est appliquée contre une rangée de galets fixes de référence au moyen de galets d'appui mobiles obliques, tandis que le rail progresse longitudinalement pendant l'usinage au moyen de deux fraises de forme stationnaires. La rangée de galets fixes sert de face de référence pour l'usinage.

Dans ce type de machine, une première fraise de forme réalise l'usinage de la face supérieure du champignon tandis qu'une deuxième fraise de forme réalise l'usinage du rayon latéral de raccordement au flanc du champignon. Les galets fixes de référence sont disposés en amont de la première fraise, entre les deux fraises et en aval de la deuxième fraise.

Une telle machine est bien adaptée dans son principe à l'usinage de rails durs mais nécessite un dispositif de guidage par galets obliques particulièrement rigide dans la zone de fraisage, que ne comporte pas la machine selon Brevet FR 1.299.795.

La demande de brevet FR 9 003 239 définit un tel dispositif de guidage dans la zone de fraisage, mais son utilisation est limité au reprofilage de rails usés ne comportant pas d'anciennes soudures électriques, dont la présente se manifeste par une surépaisseur locale résiduelle de métal sous le champignon du rail venant au contact de galets de guidage, et empéchant ainsi un usinage régulier au défilement du rail.

La présente invention a donc pour objet un dispositif de guidage du rail particulièrement rigide et stable dans la zone de fraisage au moyen de galets obliques dont la configuration laisse le libre passage des copeaux d'usinage, et permettant plus particulièrement le passage dans la machine et l'usinage au défilement de rails usés comportant des surépaisseurs locales dues à d'anciennes soudures électriques.

La machine objet de la présente invention comporte des galets obliques venant en appui et en pression symétriquement sur les faces latérales et inférieures du champignon du rail à proximité des fraises. Selon une caractéristique de l'invention les galets obliques sont montés basculants perpendiculairement au rail autour de deux arbres disposés de part et d'autre et parallèlement au rail, sur des supports mobiles, et les galets obliques sont en équilibre angulaire, en appui par arc-boutement, respectivement sur lesdits arbres d'une part et le rail d'autre part, sous l'action de vérins agissant sur les supports mobiles.

Selon une autre caractéristique de l'invention, les supports mobiles des galets obliques disposés respectivement selon le sens de défilement du rail, en amont et en aval, et à proximité de chaque fraise s'écartent en direction opposée à la face d'usinage successivement et indépendamment au passage d'une surépaisseur de soudure lors de la progression du rail en cours d'usinage, de telle manière que le niveau de la ligne de passe reste inchangé, et que le rail reste guidé sans discontinuité dans la zone de fraisage par l'un ou l'autre groupe de galets obliques amont ou aval à chaque fraise.

Les galets obliques sont pourvus de gorges qui s'encastrent dans les arètes latérales inférieures du champignon de chaque côté du rail exerçant des forces de serrage verticales et latérales approximativement égales, la face de roulement du rail étant en contact sur les galets fixes de référence.

Selon une autre caractéristique de l'invention les galets obliques sont maintenus symétriques au rail au moyens de leviers de synchronisation calés respectivement sur les arbres supports basculants parallèles au rail de chaque côté de celui-ci et l'écartement des galets obliques est pré-réglé au moyen d'un dispositif de butée ajustable de façon à éliminer tout réglage à chaque engagement d'un rail dans la machine, le rail s'engageant à force entre les galets obliques sous l'effet de la poussée de galets motorisés.

Selon une autres caractéristique de l'invention le guidage du châssis support des galets obliques est réalisé au moyen de rampes inclinées respectivement fixes et mobiles assurant une grande stabilité et un mouvement de translation rigoureusement parallèle de chaque groupe de galets, et la course des rampes mobiles est pré-réglée au moyen d'un dispositif de butées ajustables.
- La figure 1, représente une vue en élevation selon un mode de réalisation d'une machine à reprofiler selon l'invention comprenant deux unités de fraisage;
- La figure 2, est une vue selon 2-2 de la Figure 1;
- La figure 3 est une vue selon 3-3 de la figure 1 représentant le dispositif des leviers de synchronisation.

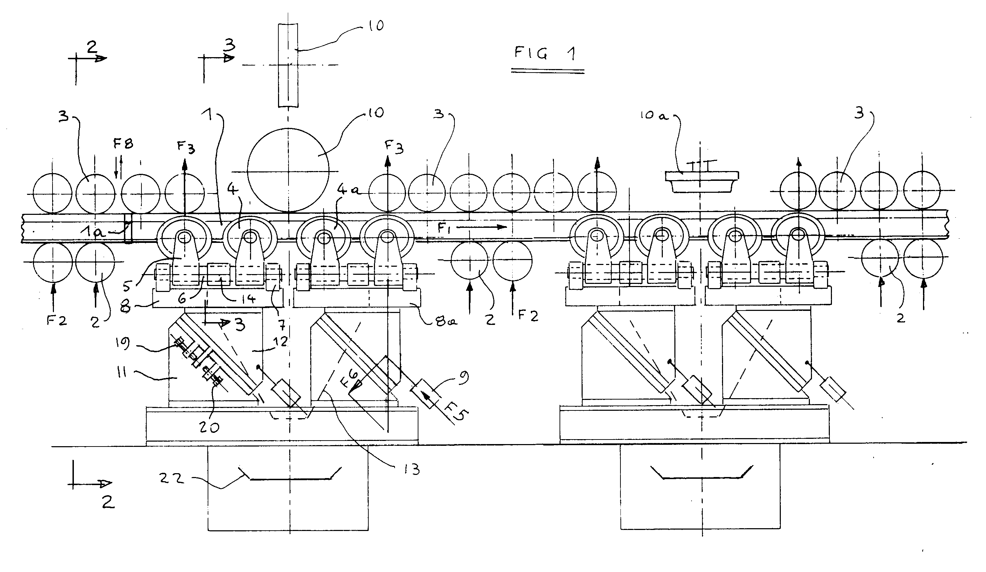

Selon les figures 1 et 2, le rail (1) se déplaçant à la vitesse d'usinage selon la flèche F1 est maintenu au contact des galets fixes supérieurs (3) au moyen d'une part des galets mobiles (2) relevables par des vérins non représentés dans le sens des flèches F2 et d'autre part des galets obliques mobiles (4) munis de gorges disposés symétriquement au plan médian du rail (1), et en appui sur les faces latérales et inférieures du champignon de celui-ci.

Le rail (1) est usiné au moyen de deux fraises (10), (10a) et chaque fraise est disposée entre deux rangées de galets fixes supérieurs (3) qui positionnent la face à usiner par rapport aux fraises. La fraise (10) usine la face supérieure du rail, la fraise (10a) usine le rayon latéral de raccordement au flanc du champignon.

Les galets obliques sont solidaires de chapes (5), basculant transversalement au rail (1) autour de 2 arbres (6) disposés parallèlement à celui-ci de part et d'autre de son plan médian. Les arbres (6) sont solidaires de châssis supports mobiles (8) (8a), par l'intermédiaire de paliers (7).

Selon une forme préférentielle de réalisation, les châssis supports sont actionnés au moyen de rampes inclinées mobiles (12) en appui sur des rampes fixes (11) assurant une translation rigoureusement parallèle des galets obliques (4) en direction du rail, sous l'effet de vérins (9) exerçant une force de poussée selon la flèche F5 sur chaque rampe mobile.

Les supports mobiles (8) et (8a) des galets obliques sont disposés en amont et en aval, et à proximité des fraises (10) et (10a) respectivement.

Selon la figure 1, la poussée F5 du vérin (9) s'est décomposé en une poussée verticale F3 perpendiculaire au rail et une poussée F6 perpendiculaire aux surfaces de glissement des rampes (11) et (12).

Selon la figure 2 la poussée verticale F3 est décomposée à son tour en une poussée horizontale F4 symétrique et latérale au rail, exercée par les galets (4) au contact du champignon et une poussée oblique F7 dans la direction de l'inclinaison des galets (4).

Selon l'invention des galets obliques se calent librement en position angulaire en équilibre stable et en arc-boutement sur les arbres (6) par l'intermédiaire des chapes (5), tandis que la face supérieure du rail est en appui contre les galets fixes (3) disposés de part et d'autre des fraises (10) et (10a).

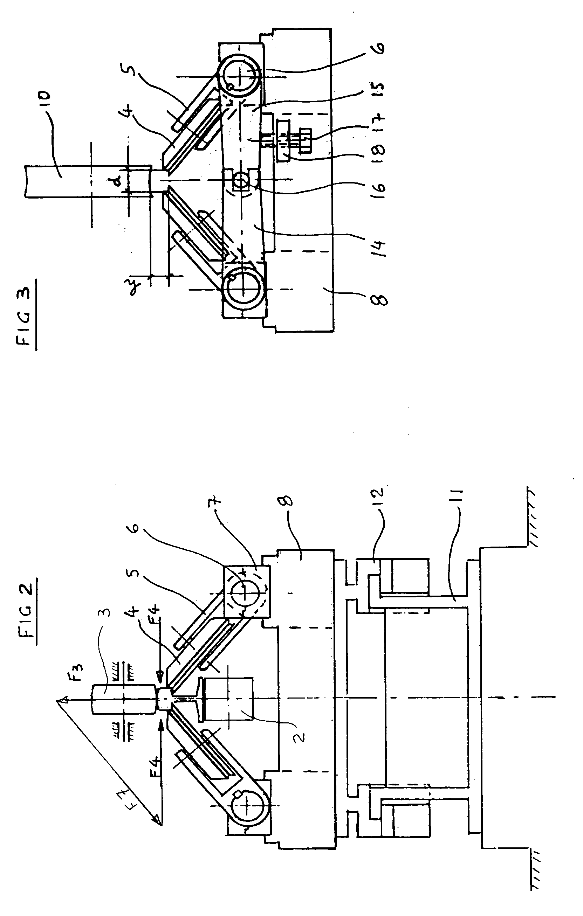

Selon l'invention et comme représenté en figure 3 les arbres (6) respectivement à droite et à gauche du rail sont synchronisés dans leur mouvement angulaire au moyen de 2 leviers (14) et (15) calés respectivement sur chaque arbre (6). Ces leviers sont solidarisés à leur extrémité au moyen d'un axe d'articulation (16). De cette façon le mouvement angulaire des arbres (6) droite et gauche ainsi que les galets (4) est toujours symétrique par rapport au rail (1).

Une vis de butée (17) solidaire d'un support (18) et venant en appui sur le levier (15) permet de pré-régler la position au repos des leviers (14) et (15) en déterminant l'écartement (d) des galets (4).

De même les vis de butées (19 et (20) solidaires des rampes fixes (11) et venant en appui sur les rampes mobiles (12), limitent la course d'avance et de recul des vérins (9) et des galets obliques (4), permettant notamment de pré-régler l'ouverture verticale des passages (h) entre la tangente horizontale au point de contact des galets (4) au rail (1) et la tangente horizontale au point de contact de la fraise (10) dans le plan médian du rail.

Des goulottes d'évacuation (13) largement ouvertes permettent la reprise des copeaux de fraisage tombant librement au travers de l'ouverture centrale des châssis (8) (8a) sur une bande transporteuse (22).

Le rail (1) en défilement dans la machine comporte généralement des anciennes soudures électriques (1a) dont la présence se manifeste par une surépaisseur résiduelle sous le champignon. La machine selon l'invention permet le passage d'une telle surépaisseur sans gêner la qualité du fraisage. Selon l'invention lorsqu'une surépaisseur de soudure se présente, la poussée du rail en défilement dans le sens de la flèche F1, force le passage de la soudure en écartant le quelques millimètres l'ensemble d'un groupe de galets (4) et de sa rampe mobile (12) en opposition au vérin (9). Ainsi le rail (1) reste soutenu et guidé successivement par au moins un des groupes de galets encadrant la fraise pendant que l'autre groupe est écarté par la poussée du rail au défilement.

En variante, dans le cadre de l'invention le guidage en translation du support (8) pourra être réalisé par des glissières verticales, des douilles à billes, ou encore par un système à double excentrique ou tout autre système de guidage en translation parallèle.

De même la synchronisation du pivotement des arbres (6) droite et gauche pourra être réalisée par deux secteurs dentés au lieu des leviers articulés (14) et (15).

Selon une autre variante la machine pourra être équipée d'une seule fraise usinant dans une même passe la face supérieure du champignon et le rayon de raccordement au flanc latéral.

Le fonctionnement de la machine est le suivant :
Le rail progressant à la vitesse de fraisage dans le sens de la flèche F1, sur des convoyeurs d'entrées et d'évacuation non représentés, comportant des rouleaux presseurs motorisés, la face du rail à usiner est mise en appui sur les galets fixes (3) disposés en amont et aval des fraises (10) et (10a) sous l'effet des galets mobiles (2) actionnés en direction de la flèche F2 au moyen de vérins non représentés, et des galets obliques (4), actionnés par les vérins (9).

Les galets fixes (3) constituant la face de référence de positionnement du rail, les fraises (10) et (10a) enlèvent une épaisseur constante de métal sur cette face indépendamment des variations possibles de la hauteur globale du rail.

Selon un principe connu, l'épaisseur du métal enlevé peut être réglée en décalent perpendiculairement à la direction du rail selon la flèche F8 la rangée de galets fixes (3) disposée en amont de la fiaise (10), par des moyens connus tels que des rampes inclinées non représentées, la position de la fraise (10) restant inchangée. Les galets (3) en aval de la fraise (10) ne sont pas réglables.

La face inférieure de la fraise (10) au contact du rail en son plan médian reste toujours dans l'alignement de la tangente au point bas des galets de référence (3) disposés en aval de cette fraise.

Le rail progresse selon la flèche F1 à la vitesse de fraisage, face aux galets obliques (4) dont l'écartement horizontal (d) est pré-réglé au moyen de la vis de butée (17). De même l'ouverture de passage verticale (h) entre les galets obliques (4) et la face de contact à la fraise (10) est pré-réglée au moyen de la vis de butée (19). Les vérins (9) sont constamment en pression de sorte que la tête du rail s'engage à force entre les premiers galets obliques en les écartant légèrement, horizontalement et verticalement, les ouvertures (d) et (h) de passage entre galets étant légèrement inférieures respectivement à la largeur et la hauteur du champignon du rail.

Le rail est reprofilé au passage, successivement par la fraise de forme (10) agissant sur la face supérieure du champignon et la fiaise (10a) reproduisant le rayon latéral de l'angle supérieur du champignon. Lorsqu'une surépaisseur de soudure (1a) se présente les galets (4) sont écartés légèrement grâce au recul du vérin (9) et reprennent leur position après passage de la surépaisseur.

Ainsi, au voisinage des fraises le rail (1) est toujours soutenu, soit par les rouleaux obliques (4) en amont, soit par les rouleaux obliques en aval, les vérins (9) étant constamment en pression, et l'usinage du rail (1) reste parfaitement rectiligne.

## Revendications

1. Machine à reprofiler les rails usés en défilement comprenant des convoyeurs d'alimentation et d'évacuation motorisés, des galets fixes (3) au contact de la face à usiner du rail (1) disposés respectivement en amont et en aval d'au moins une fraise stationnaire (10), des galets mobiles obliques (4), disposés symétriquement au plan médian du rail dans la zone de fraisage et venant en appui sur l'arète latérale du champignon, caractérisée en ce que les galets obliques (4) sont montés basculants perpendiculairement au rail (1) autour de deux arbres (6) disposés de part et d'autre et parallèlement au plan médian du rail (1) et en ce que les arbres (6) sont solidaires de supports (8) (8a) mobiles sous l'action de verins (9), et en ce que les galets mobiles sont disposés respectivement à proximité en amont et en aval des fraises selon le sens F1 de défilement du rail (1) de sorte qu'ils s'écartent successivement et temporairement sous la poussée d'avance du rail au passage d'une surépaisseur de soudure (1a) tandis que le niveau de la ligne de passe d'usinage déterminé par les galets fixes (3) reste inchangé, et que le rail reste toujours guidé dans la zone d'usinage, par au moins un groupe de galets (4).

2. Machine selon revendication 1 caractérisée en ce que les galets obliques (4) sont disposés en position d'équilibre angulaire au contact du rail (1) en arc-boutement sur les arbres (6) sous l'action des verins (9) agissant sur les supports mobiles (8) de sorte que lesdits galets exercent sur le rail une force de serrage laterale F4 et verticale F3.

3. Machine selon revendication (1) caractérisée en ce que chaque support (8), (8a) est guidé en translation parallèle au moyen d'une rampe inclinée fixe (11) associée à une rampe mobile (12) solidaire dudit support et en ce que la course de la rampe mobile (12) sous l'effet du vérin (9) est limitée par des butées réglables (19) permettant d'ajuster à vide l'ouverture de passage du champignon du rail entre les galets obliques (4) et la fraise (10).

4. Machine selon revendication 1 à 3 caractérisée en ce que les arbres (6) supportant les galets obliques (4) sont maintenus symétriques au rail (1) au moyen de leviers (14) et (15) calés sur les arbres (6) et solidarisés à leur extrémité libre au moyen d'un axe d'articulation (16).

5. Machine à reprofiler selon les revendications 1 à 3 caractérisée en ce que l'écartement horizontal (d) entre les faces de contact au rail (1) des galets obliques (4) est pré-réglé à vide au moyen d'une butée ajustable (17).

6. Machine à reprofiler selon les revendications 1 à 3 caractérisée en ce que l'usinage du profil du rail (1) est réalisé par deux fraises de forme stationnaires agissant successivement au défilement du rail (1).

7. Machine à reprofiler selon revendications 1 à 3 caractérisée en ce que l'usinage du profil du rail (1) est réalisé par une seule fraise de forme stationnaire.

8. Machine à reprofiler selon les revendications 1 à 3 caractérisée en ce que le guidage des supports (8) des galets obliques (4) est réalisé au moyen de glissières verticales, de douilles à bille, ou d'excentriques.

9. Machine selon revendication 1 à 3 caractérisée en ce que les arbres (6) sont maintenus symétriques au rail au moyen de secteurs dentés.
